Europäisches Patentamt

European Patent Office

Office européen des brevets

(19)

(11) Publication number: **0 102 126**
**B1**

(12)

# EUROPEAN PATENT SPECIFICATION

(45) Date of publication of patent specification: **12.03.86**

(51) Int. Cl.⁴: **B 65 F 1/04, F 16 N 31/00**

(21) Application number: **83201221.5**

(22) Date of filing: **23.08.83**

(54) **Refuse container.**

(30) Priority: **25.08.82 NL 8203327**

(43) Date of publication of application:
**07.03.84 Bulletin 84/10**

(45) Publication of the grant of the patent:
**12.03.86 Bulletin 86/11**

(84) Designated Contracting States:
**AT BE CH DE FR GB IT LI LU NL SE**

(56) References cited:
**DE-C- 679 125**
**US-A-1 481 685**
**US-A-2 063 507**
**US-A-2 199 970**
**US-A-3 029 012**
**US-A-3 156 270**

(73) Proprietor: **Kouwenhoven, Josephus Nicolaas Marie**
**Dresdenlaan 25**
**NL-3055 WD Rotterdam (NL)**

(72) Inventor: **Kouwenhoven, Josephus Nicolaas Marie**
**Dresdenlaan 25**
**NL-3055 WD Rotterdam (NL)**

(74) Representative: **Timmers, Cornelis Herman Johannes et al**
**EXTERPATENT Willem Witsenplein 4**
**NL-2596 BK 's-Gravenhage (NL)**

Courier Press, Leamington Spa, England.

## Description

The invention relates to a refuse container comprising a housing enclosing at least one liquid holder into which liquid may be poured through a tube and a solid refuse collecting space.

Such a refuse container is known from US—A—3,156,270. In the housing of this known container is a collecting tube suspended serving to support an emptied oil can to drain off the oil remaining therein and guide this oil to the, removable liquid holder; the empty cans are to be deposited on the bottom of the housing which serves as the solid refuse collecting space. This known refuse container is thus only suited for collecting small amounts of oil However, in practice there exists a great need for a refuse container capable of collecting a great amount of waste oil as the pollution of the environment, caused by waste fluids and particularly by waste motoroil is an ever increasing problem. The sharply risen costs of car servicing has as a result that an increasing number of owners changes the motoroil themselves, the more so because cheap oil is easily obtainable in warehouses but the waste oil is mostly deposited into the sewer which in its turn leads to even increasing problems in the cleaning of the sewer fluid as oil is difficult to remove. Moreover, a small amount of oil contaminates a big amount of water so that the practice of some motorists to deposit the waste oil in the ground greatly worries the authorities in water producing areas.

It is to be expected that, when there were only easily accessible and easy to be operated refuse containers for waste oil a great part of the waste oil which now ends up into the environment would be deposited therein, as experience with the well-known glass collecting boxes has learned that the average citizen is certainly not unwilling to use such collecting reservoirs if only they would be easily accessible and simple in use.

The invention aims to provide such a refuse container. According to the invention this container is characterised in that the housing presents two openings, one connected to the liquid holder via the tube for receiving waste liquid, e.g. waste motor oil, from a waste liquid container, and the other opening connected to the solid refuse collecting space for receiving the emptied waste liquid container.

By providing in one housing at least one holder for the waste fluid and separate therefrom a, separately accessible space for the containers the waste oil can be disposed off quite easily: the container (oil can, bottle) is first emptied into the opening that is meant for that purpose and thereafter the container is deposited in the collecting space.

A preferred embodiment is characterised in that the housing consists of a cylindrical lower part and adjoining the same a hemispherical upper part, in which a chamber is formed which is defined by a flat bottom part, in which the opening of the first duct is formed, and an ascending wall part having therein an opening giving access to the duct leading into the container collecting space.

Not only has such a reservoir an attractive look but also the handling of the containers in such a reservoir is quite easy: the opening provided in the bottom of the chamber, which is preferably countersunk, makes it easy to empty the container without spillage.

Preferably the collecting space is formed by a removable bag.

As waste oil has a certain value preferably provision is made to prevent the unauthorized emptying of the first holder. To this end an S-trap is provided in the first duct and the closable standpipe leads into the holder; the holder can be emptied by means of a suction device through said standpipe.

A favourable situation of the several holders is obtained when the first holder is formed by three interconnected part holders disposed at the corners of a triangle and the container collecting space is defined by these part holders and the housing wall.

It is observed that US—A—2,199,970 discloses a combination oil salvage and refuse container having the same drawbacks as the one disclosed in US—A—3,156,270. Furthermore the use a removable bag as collecting space is known in itself from US—A—3,029,012 while a waste receptacle of which the housing consists of a cylindrical lower part with a hemispherical upper part is known in itself from US—A—2,063,507.

The invention is elucidated on the hand of the drawing.

Fig. 1 shows perspectively, partly cut-out, a preferred embodiment according to the invention;

Fig. 2 shows schematically in elevation the various containers;

Fig. 3 is a vertical cross section of the two openings.

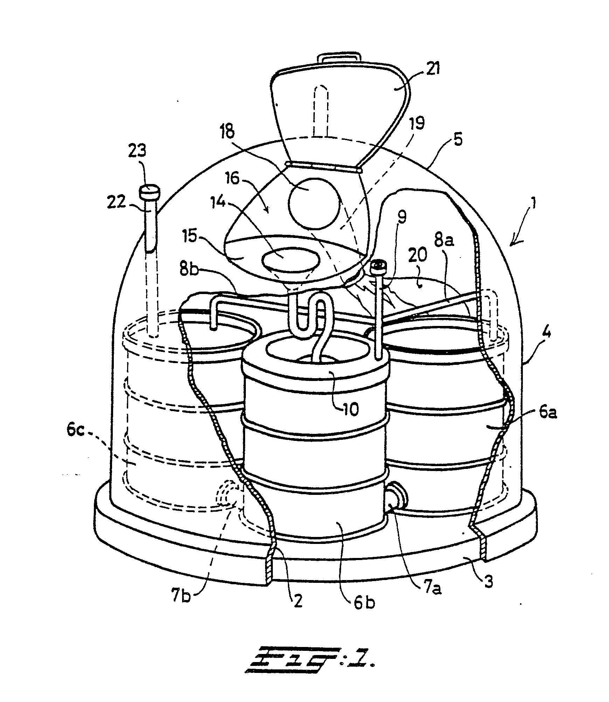

Figure 1 shows a reservoir indicated as a whole with reference numeral 1 and consisting of the housing wall 2 adjacent a base 3. Housing 2 has a cylindrical lower part 4 and a hemispherical upper part 5. Three holders 6a, 6b, 6c are disposed on the base 3, each consisting of a commercially available oil drum known per se. At the bottom the three holders 6a, 6b, 6c are interconnected via the ducts 7a, 7b and at the top via the venting ducts 8a, 8b, which lead to the central venting duct 9. The holders 6a, 6b are closed at the top while the holder 6b is covered at the top by a flame-killing lid 10 having a central opening 11. The use of a flame-killing lid of this kind is known per se, e.g. for waste bins.

The oil supply duct 12 containing the S-trap 13 leads into the central opening 11. The other end of this duct terminates in the opening 14 which is countersunk in the bottom part 15 of a recess 16 in the upper part 5 of the reservoir. This recess has an obliquely sloping first wall 17 with an opening 18 leading to an obliquely downwardly extending duct 19 terminating in a waste bag 20.

The latter is disposed in the space between the holders 6a, 6c on the one hand and the wall of the housing part 4 on the other hand. Recess 16 can be closed by the hinged lid 21, the shape of which matches the shape of the upper part.

To enable the filled holders 6a, 6c to be emptied, holder 6c bears a standpipe 22 extending to outside the reservoir and closed by a sealable cap 23. The holders 6a, 6b and 6c can be rapidly emptied by a suction device known per se.

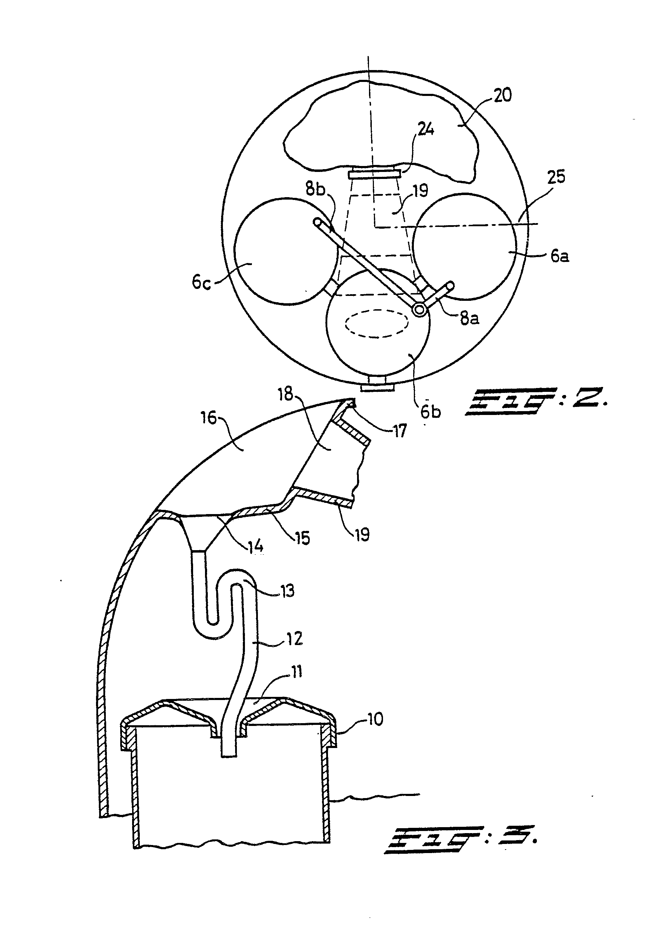

Waste bag 20 can be detachably secured to duct 19 in any suitable way, e.g. by means of the resilient clamp ring 24. Part of the wall of the reservoir can be adapted to swing away as indicated diagrammatically by reference 25 in Figure 2, in order to permit removal of the waste bag 20.

## Claims

1. A refuse container comprising a housing (1) enclosing at least one liquid holder (6b) into which liquid may be poured through a tube (12) and a solid refuse collecting space (20) characterised in that the housing (1) presents two openings (14, 18), one (14) connected to the liquid holder (6a) via the tube (12) for receiving waste liquid, e.g. waste motor oil, from a waste liquid container, and the other opening (18) connected to the solid refuse collecting space (20) for receiving the emptied waste liquid container.

2. A refuse container according to claim 1, characterised in that the housing (1) consists of a cylindrical lower part (4) and adjoining the same a hemispherical upper part (5), in which a chamber (16) is formed which is defined by a flat bottom part (15), in which the opening (14) of the first duct (12) is formed, and an ascending wall part having therein an opening (18) giving access to the duct (19) leading into the container collecting space.

3. A refuse container according to claim 1 or 2, characterised in that the container collecting space is formed by a removable bat (20).

4. A refuse container according to claims 1 to 3, characterised in that an S-trap (13) is provided in the first duct (12) and a closable standpipe (22) leads into the first holder.

5. A refuse container according to claims 1 to 4, characterised in that the first holder is formed by three interconnected part holders (6a, 6b, 6c) disposed at the corners of a triangle and the container collecting space is defined by these part holders and the housing wall.

## Patentansprüche

1. Abfallbehälter mit einem Gehäuse (1), das wenigstens einen über ein Rohr (12) mit Flüssigkeit füllbaren Flüssigkeitsbehälter (6b) und einen Sammelraum (20) für feste Abfallstoffe aufweist, dadurch gekennzeichnet, daß das Gehäuse (1) zwei Öffnungen (14, 18) aufweist, von denen die eine Öffnung (14) über das Rohr (12) mit dem Flüssigkeitsbehälter (6a) verbunden ist, um Abfallflüssigkeit, z.B. Motor-Altöl, aus einem entsprechenden Gefäß aufzunehmen, und von denen die andere Öffnung (18) mit dem Sammelraum (20) für feste Abfallstoffe zur Aufnahme des geleerten Gefäßes verbunden ist.

2. Abfallbehälter nach Anspruch 1, dadurch gekennzeichnet, daß das Gehäuse (1) aus einem zylindrischen Unterteil (4) und einem damit verbundenen halbkugelförmigen Oberteil (5) besteht, daß in das Oberteil (5) eine Kammer (16) eingeformt ist, die durch eine ebenes, die Öffnung (14) des ersten Rohrs (12) aufweisendes Bodenteil (15) und durch ein aufgerichtetes, eine Zutrittsöffnung (18) zu dem zum Sammelraum für die Gefäße führenden Rohr (19) aufweisendes Wandteil gebildet ist.

3. Abfallbehälter nach Anspruch 1 oder 2, dadurch gekennzeichnet, daß der Sammelraum für die Gefäße als abnehmbarer Sack (20) ausgebildet ist.

4. Abfallbehälter nach einem der Ansprüche 1 bis 3, dadurch gekennzeichnet, daß in dem ersten Rohr (12) ein S-förmiger Syphon (13) angeordnet ist und daß ein verschließbares Standrohr (22) in den ersten Behälter führt.

5. Abfallbehälter nach einem der Ansprüche 1 bis 4, dadurch gekennzeichnet, daß der erste Behälter aus drei miteinander verbundenen, an den Ecken eines Dreiecks angeordneten Teilbehältern (6a, 6b, 6c) besteht und daß der Sammelraum für die Gefäße durch diese Teilbehälter und die Gehäusewand gebildet ist.

## Revendications

1. Récipient de rejets comprenant une enveloppe (1) qui contient au moins un réceptacle de liquide (6b), dans lequel un liquide peut être versé par l'intermédiaire d'un tube (12), et un espace (20) de collecte de rejets solides, caractérisé en ce que l'enveloppe (1) comporte deux orifices (14, 18), dont l'un (14) est relié au réceptacle de liquide (6a) par l'intermédiaire du tube (12) de réception des rejets liquides, par exemple de l'huile de vidange de moteur, provenant d'un récipient de liquide usé, et dont l'autre (18) est raccordé à l'espace (20) de collecte de rejets solides pour recevoir le récipient de liquide usé vidé.

2. Récipient de rejets suivant la revendication 1, caractérisé en ce que l'enveloppe (1) comprend une partie inférieure cylindrique (4) et, adjacente à celle-ci, une partie supérieure hémisphérique (5) dans laquelle est ménagée une chambre (16) qui est définie par un fond plat (15), dans lequel est prévu l'orifice (14) du premier conduit (12), et par une paroi montante comportant un orifice (18) qui donne accès au conduit (19) aboutissant dans l'espace de collecte de récipients.

3. Récipient de rejets suivant la revendication 1 ou 2, caractérisé en ce que l'espace de collecte de récipients est constitué par un sac amovible (20).

4. Récipient de rejets suivant les revendications 1 à 3, caractérisé en ce qu'un siphon de sécurité (13) est prévu dans le premier conduit (12) et un tube plongeur obturable (22) aboutit dans le premier réceptacle.

5. Récipient de rejets suivant les revendications 1 à 4, caractérisé en ce que le premier réceptacle est formé de trois réceptacles partiels inter-connectés (6a, 6b, 6c), disposés aux sommets d'un triangle, et l'espace de collecte de récipients est défini par ces réceptacles partiels et par la paroi de l'enveloppe.

*FIG:1.*

0 102 126

FIG:2.

FIG:3.

2